# EUROPEAN PATENT APPLICATION

(11) **EP 4 703 963 A1**
(43) Date of publication of application: **04.03.2026**
(21) Application number: 25152564.8
(22) Date of filing: 17.01.2025
(51) Int. Cl.: G06F 40/30, G06F 40/56, G06N 3/0475

(54) **INFORMATION PROCESSING SYSTEM AND PROGRAM**

(30) Priority: 29.08.2024 JP 2024147411
(71) Applicant: FUJIFILM Business Innovation Corp., Minato-ku Tokyo (JP)
(72) Inventor: HASEGAWA, Ryo, Yokohama-shi (JP); TAKAAI, Motoyuki, Yokohama-shi (JP)
(74) Representative: Haseltine Lake Kempner LLP

(57) **Abstract**

An information processing system includes a processor configured to: acquire input data; acquire output data generated by artificial intelligence in response to the input data; and output the output data and error possibility information indicating a degree of possibility that an element of multiple elements in the output data includes an error by the artificial intelligence.

## Description

### Background

### (i) Technical Field

The present disclosure relates to an information processing system and a program.

### (ii) Related Art

Japanese Unexamined Patent Application Publication No. 2024-60429 describes a knowledge determination device that detects a knowledge error in a sentence. The knowledge determination device extracts content words that satisfy a predetermined condition from a sentence, extracts a content word pair composed of the content words, predicts a function word in the content word pair from the sentence, and generates a dialog graph in which the predicted function word connects the paired content words. The knowledge determination device also searches for a function word in the content word pair, generates a knowledge graph in which the function word connects the paired content words, generates a feature for each of the content words from each of the dialog graph and the knowledge graph, inputs the feature of each content word in the dialog graph and the feature of each content word in the knowledge graph, and classifies the content word as a knowledge legality or a knowledge error.

Japanese Unexamined Patent Application Publication No. 2019-3552 describes a processing apparatus that processes parallel translation data including an input sentence written in a first language and a translated sentence in which the input sentence is translated into a second language. The processing apparatus acquires first parallel translation data that is a pair of the first sentence written in the first language and a first translated sentence serving as the translated sentence in which the first sentence is translated into the second language, evaluates whether the first parallel translation data is possibly mistranslated parallel translation data on the basis of words and phrases included in the first sentence and the first translated sentence, and outputs information based on the result.

Japanese Unexamined Patent Application Publication No. 2020-52818 describes an information processing apparatus that acquires a target sentence, divides the target sentence into unit character strings, calculates an occurrence probability of each unit character string in the target sentence divided by the division unit, the occurrence probability being calculated by using a text model trained on the basis of the order of the unit character strings in multiple sentences, determines the number of training iterations of the unit character string in the target sentence in the text model, and determines whether the determined number of training iterations of the unit character string exceeds a threshold.

### Summary

When artificial intelligence (AI) generates output data in response to input data, an element in the output data includes an error made by the AI on occasions. In such a case, although a configuration in which whether an element in output data includes an error by the AI is employed, it is not possible to cause a user to recognize the degree of a possibility that the element in the output data includes an error by the AI.

Accordingly, it is an object of the present disclosure to cause a user to recognize the degree of a possibility that an element in output data includes an error by AI.

According to a first aspect of the present disclosure, there is provided an information processing system including a processor configured to: acquire input data; acquire output data generated by artificial intelligence in response to the input data; and output the output data and error possibility information indicating a degree of possibility that an element of a plurality of elements in the output data includes an error by the artificial intelligence.

According to a second aspect of the present disclosure, in the information processing system according to the first aspect, the processor is configured to output the output data and the error possibility information that is attached to the element.

According to a third aspect of the present disclosure, in the information processing system according to the second aspect, the output data is text data, and the processor is configured to attach the error possibility information to the element in the text data by setting an attribute of a character corresponding to the element as an attribute based on the error possibility information.

According to a fourth aspect of the present disclosure, in the information processing system according to any one of the first to third aspects, the plurality of elements are all of elements in the output data.

According to a fifth aspect of the present disclosure, in the information processing system according to any one of the first to third aspects, the element is a predetermined type of element of a plurality of elements in the output data.

According to a sixth aspect of the present disclosure, in the information processing system according to the fifth aspect, the output data is text data, and the predetermined type of element is at least one of an element serving as a predetermined part of speech or an element composed of a numeral.

According to a seventh aspect of the present disclosure, in the information processing system according to any one of the first to third aspects, the element is an element other than a predetermined type of element of a plurality of elements in the output data.

According to an eighth aspect of the present disclosure, in the information processing system according to the seventh aspect, the output data is text data, and the predetermined type of element is an element serving as a predetermined part of speech.

According to a ninth aspect of the present disclosure, in the information processing system according to the seventh aspect, the output data is text data, and the predetermined type of element is at least one of an element serving as an antonym or a translation element.

According to a tenth aspect of the present disclosure, in the information processing system according to any one of the first to ninth aspects, the processor is configured to: acquire, as the output data, data generated by the artificial intelligence on a basis of a large language model; and output, as the error possibility information, information generated on a basis of identifiability information indicating a degree of identifiability of a knowledge neuron in the large language model, the knowledge neuron being associated with the element.

According to an eleventh aspect of the present disclosure, in the information processing system according to the tenth aspect, the processor is configured to: in response to the identifiability information indicating that the identifiability of the knowledge neuron associated with the element in the large language model is low, generate error possibility information indicating that the possibility that the element includes an error by the artificial intelligence is high.

According to a twelfth aspect of the present disclosure, in the information processing system according to the tenth aspect, the processor is configured to acquire the identifiability information on a basis of association information in which a contribution probability is associated with each element of a plurality of elements in the output data, the contribution probability being that one of neurons in a plurality of layers for the element contributes to decision of a subsequent element that is subsequent to the plurality of elements.

According to a thirteenth aspect of the present disclosure, in the information processing system according to the twelfth aspect, the processor is configured to acquire, as the identifiability information, information based on a probability of a layer of the layers that is associated with an element except a last element of the plurality of elements in the association information.

According to a fourteenth aspect of the present disclosure, in the information processing system according to the twelfth aspect, the processor is configured to acquire, as the identifiability information, information based on a probability of a layer of the layers that is associated with a last element of the plurality of elements in the association information.

According to a fifteenth aspect of the present disclosure, there is provided a program causing a computer to execute a process including: acquiring input data; acquiring output data generated by artificial intelligence in response to the input data; and outputting the output data and error possibility information indicating a degree of possibility that an element in the output data includes an error by the artificial intelligence.

According to the first aspect of the present disclosure, the user may recognize the degree of the possibility that the element in the output data includes an error by the AI.

According to the second aspect of the present disclosure, the user may easily recognize the association between the element in the output data and the degree of the possibility that an error by the AI is included.

According to the third aspect of the present disclosure, the user may recognize the association between the element in the output data and the degree of the possibility that an error by the AI is included at a glance.

According to the fourth aspect of the present disclosure, the user may recognize the degree of the possibility that the element includes an error by the AI for all of the elements of the output data.

According to the fifth aspect of the present disclosure, the user may recognize the degree of the possibility that the element includes an error by the AI for the predetermined type of element in the output data.

According to the sixth aspect of the present disclosure, the user may recognize the degree of the possibility that the element includes an error by the AI for at least one of the element serving as the predetermined part of speech in the output data or the element composed of a numeral.

According to the seventh aspect of the present disclosure, the user may recognize the degree of the possibility that the element includes an error by the AI for the element other than the predetermined type of element in the output data.

According to the eighth aspect of the present disclosure, the user may recognize the degree of the possibility that the element includes an error by the AI for an element other than the element serving as the predetermined part of speech in the output data.

According to the ninth aspect of the present disclosure, the user may recognize the degree of the possibility that the element includes an error by the AI for an element other than the at least one of the element serving as the antonym or the translation element in the output data.

According to the tenth aspect of the present disclosure, the user may recognize the degree of the possibility that the element in the output data includes an error by the AI without the need for an external database.

According to the eleventh aspect of the present disclosure, the user may recognize that if the identifiability of the knowledge neuron associated with the element in the large language model is low, the possibility that the element in the output data includes an error by the AI is high.

According to the twelfth aspect of the present disclosure, the degree of the identifiability of the knowledge neuron associated with the element in the large language model may be recognized easily.

According to the thirteenth aspect of the present disclosure, the degree of the identifiability of the knowledge neuron associated with the element in the large language model may be recognized in view of the probability of the layer associated with the element except the last element in the output data.

According to the fourteenth aspect of the present disclosure, the degree of the identifiability of the knowledge neuron associated with the element in the large language model may be recognized in view of the probability of the layer associated with the last element in the output data.

According to the fifteenth aspect of the present disclosure, the user may recognize the degree of the possibility that the element in the output data includes an error by the AI.

### Brief Description of the Drawings

An exemplary embodiment of the present disclosure will be described in detail based on the following figures, wherein:
Fig. 1 is a view illustrating an example overall configuration of a text generation system in this exemplary embodiment;
Fig. 2 is a diagram illustrating an example hardware configuration of a user terminal in this exemplary embodiment;
Fig. 3 is a diagram illustrating an example hardware configuration of a server in this exemplary embodiment;
Fig. 4 is a view illustrating an example screen displayed on the user terminal;
Fig. 5 is a schematic view illustrating internal processing performed by the server;
Fig. 6 is a schematic view illustrating word prediction without the occurrence of hallucination;
Fig. 7 is a schematic view illustrating word prediction in the occurrence of hallucination;
Fig. 8 is a block diagram illustrating an example functional configuration of the text generation system in this exemplary embodiment;
Fig. 9 is a schematic view illustrating a word prediction process by a knowledge neuron analysis unit by using a large language model (LLM) in a normal state;
Fig. 10 is a schematic view illustrating a word prediction process by the knowledge neuron analysis unit by using the LLM having all the neurons with noise;
Fig. 11A is a schematic view illustrating a word prediction process by the knowledge neuron analysis unit by using the LLM having a neuron with noise;
Fig. 11B is a schematic view illustrating a word prediction process by the knowledge neuron analysis unit by using the LLM having a neuron with noise;
Fig. 11C is a schematic view illustrating a word prediction process by the knowledge neuron analysis unit by using the LLM having a neuron with noise;
Fig. 12 is a view illustrating a heat map to be recorded by the knowledge neuron analysis unit without the occurrence of hallucination;
Fig. 13 is a view illustrating a heat map to be recorded by the knowledge neuron analysis unit in the occurrence of hallucination;
Fig. 14 is a view illustrating indexes calculated by an index calculation unit; and
Fig. 15 is a flowchart illustrating example operations by a server included in the text generation system in this exemplary embodiment.

### Detailed Description

Hereinafter, an exemplary embodiment will be described in detail with reference to the attached drawings.

### Outline of This Exemplary Embodiment

This exemplary embodiment provides an information processing system that acquires input data, acquires output data generated by AI in response to the input data, and outputs the output data and error possibility information indicating the degree of a possibility that an element in the output data includes an error by the AI.

The term "data" may denote any of text data and image data, but text data is taken as an example in the following description. Text is particularly described below as example of the text data. Text is a unit composed of one or more sentences. Text thus includes a sentence.

The term "element" may denote any data as long as the data is part of "data". Since text is hereinafter taken as an example of "data", a word is described as an example of "element".

The term "error by AI" denotes outputting wrong information by the AI. For example, the input data is "Tell me about F Industry.", and F Industry's establishment year is actually 1934. Nevertheless, the AI outputs output data "F Industry is a Japan-based maker. It was established in the year 1939 ···." on occasions. Such a case corresponds to "error by AI". "Error by AI" is hereinafter referred to as "hallucination".

Further, the term "system" may denote a system composed of one apparatus or multiple apparatuses. An information processing system composed of one apparatus is hereinafter taken as an example, and a server in a text generation system is described as an example of the one apparatus.

### Overall Configuration of Text Generation System

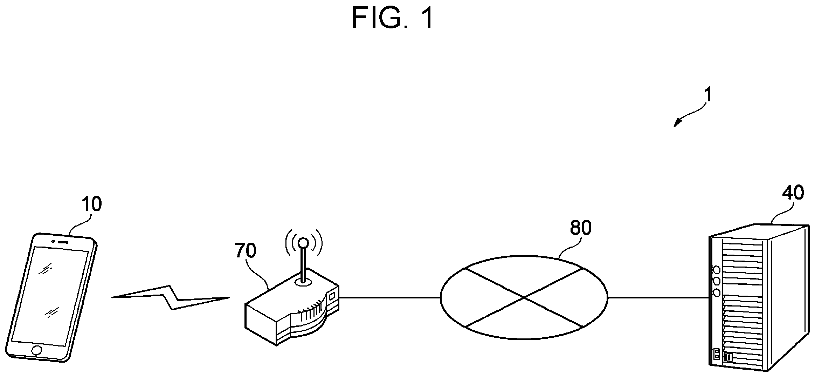

Fig. 1 is a view illustrating an example overall configuration of a text generation system 1 in this exemplary embodiment. As illustrated in Fig. 1, the text generation system 1 includes a user terminal 10 and a server 40. The user terminal 10 is wirelessly connectable to a communication network 80 via an access point 70 through radio communication such as Wi-Fi (registered trademark). The server 40 is also connected to the communication network 80. Although Fig. 1 illustrates the one user terminal 10 and the one server 40, user terminals 10 and servers 40 may be present. The communication network 80 may be, for example, the Internet.

The user terminal 10 is a terminal device used by a user to input text and receive the presentation of text generated by AI in response to the input text. On the user terminal 10, an application that displays text input by the user and text generated by the AI is installed. The user terminal 10 transmits the text input by the user to the server 40 and receives the text generated by the AI from the server 40. The user terminal 10 is preferably implemented by, for example, a smartphone.

In response to receiving text from the user terminal 10, the server 40 generates text serving as an answer to the text by using the AI. The server 40 then transmits the generated text to the user terminal 10. The server 40 may be implemented by, for example, a personal computer.

### Hardware Configuration of User Terminal

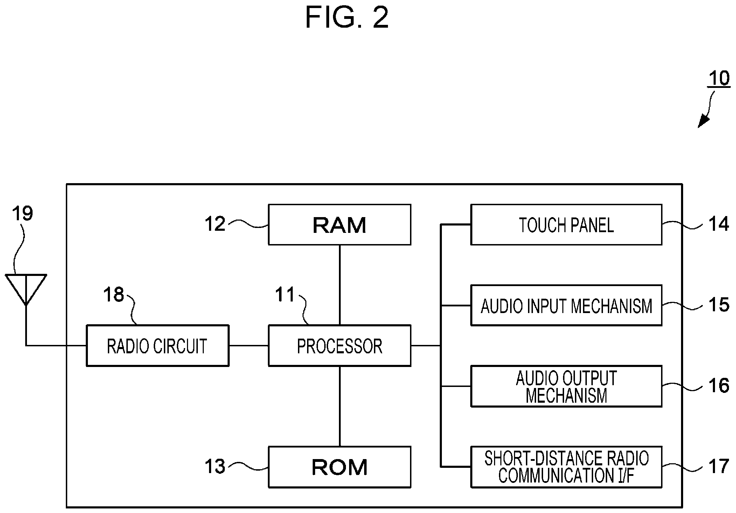

Fig. 2 is a diagram illustrating of the user terminal 10 in this exemplary embodiment. As illustrated in Fig. 2, the user terminal 10 includes a processor 11. The user terminal 10 further includes a RAM 12 and a ROM 13. The user terminal 10 further includes a touch panel 14, an audio input mechanism 15, and an audio output mechanism 16. The user terminal 10 further includes a short-distance radio communication interface (I/F) 17, a radio circuit 18, and an antenna 19.

The processor 11 is configured to execute an operating system (OS) and various pieces of software such as applications.

The RAM 12 and the ROM 13 are memory areas to store the various pieces of software and data and the like used to run the pieces of software.

The touch panel 14 is used to display various pieces of information and receive operation input from the user.

The audio input mechanism 15 is a mechanism for inputting audio. The audio input mechanism 15 is, for example, a microphone.

The audio output mechanism 16 is a mechanism for outputting audio. The audio output mechanism 16 is, for example, a speaker.

The short-distance radio communication I/F 17 is an interface for transmitting and receiving various pieces of information to and from a different apparatus through short-distance radio communication. As the short-distance radio communication, for example, near field communication (NFC) may be used.

The radio circuit 18 and the antenna 19 are used to perform the radio communication via the base station. The radio circuit 18 (not illustrated) includes a baseband LSI. The baseband LSI performs signal processing of digital data wirelessly transmitted and received.

### Hardware Configuration of Server

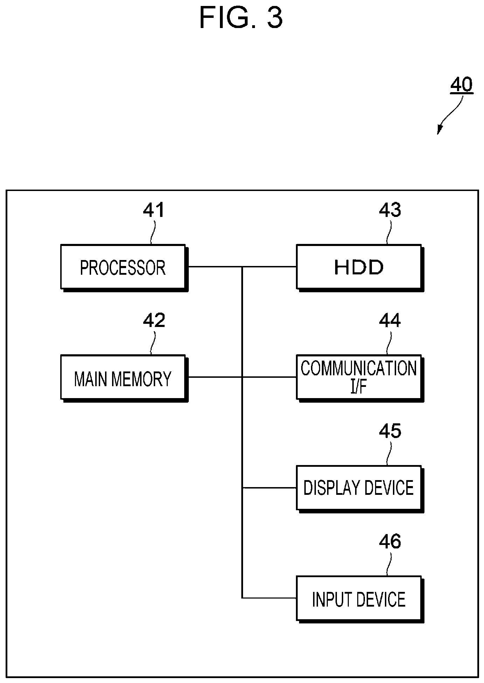

Fig. 3 is a diagram illustrating an example configuration of the server 40 in this exemplary embodiment. As illustrated in Fig. 3, the server 40 includes a processor 41. The server 40 further includes a main memory 42 and a hard disk drive (HDD) 43. The server 40 further includes a communication I/F 44, a display device 45, and an input device 46.

The processor 41 is configured to run an operating system (OS) and various pieces of software such as applications and thus implement functions (described later).

The main memory 42 is a memory area where the various pieces of software and data and the like used to run the pieces of software are stored.

The HDD 43 is a memory area to store data input to the various pieces of software, data output from the various pieces of software, and the like.

The communication interface I/F 44 is an interface for performing communication with external apparatuses.

The display device 45 is a device for displaying information. The display device 45 is, for example, a display.

The input device 46 is a device for inputting information. The input device 46 is, for example, a keyboard or a mouse.

### Example Display on User Terminal

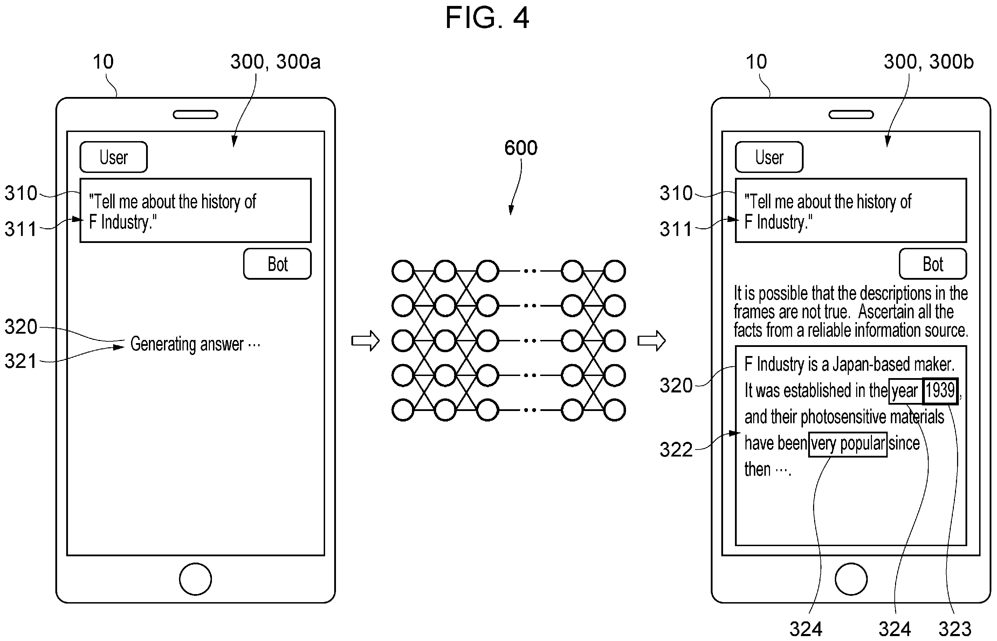

Fig. 4 is a view illustrating an example of a screen 300 displayed on the user terminal 10. As illustrated in Fig. 4, the screen 300 includes a user text display area 310 and a bot text display area 320. The user text display area 310 is an area to display text input by the user. The bot text display area 320 is an area to display text to be presented to the user by the bot. The text as described includes text generated by the server 40 (see Fig. 1).

First, the user inputs text 311. The text 311 reads as "Tell me about the history of F Industry." At this time, as displayed on a screen 300a, the text input by the user 311 is displayed in the user text display area 310.

The server 40 then starts generating text serving as an answer to the text 311 by using a LLM 600. At this time, as displayed on the screen 300a, text 321 "Generating answer ..." is displayed in the bot text display area 320.

Thereafter, the server 40 generates text 322 serving as an answer to the text 311. The text 322 reads as "F Industry is a Japan-based maker. It was established in the year 1939, and their photosensitive materials have been very popular since then • • •." Meanwhile, the server 40 analyzes the interior of the LLM 600 while generating the text 322.

The server 40 thereby calculates the hallucination probability of each of words in the text 322. The hallucination probability is a probability that the word is generated as hallucination. At this time, as displayed on a screen 300b, the text 322 generated by the server 40 is displayed in the bot text display area 320. For the text 322, an attribute based on the hallucination probability of a word is assigned for each word. The attributes are the color, depth, font, size, thickness of a character, the color and depth of the background of the character, the presence or absence of an underline of the character, and the like.

In Fig. 4, a first attribute is assigned to the word "1939". The first attribute may be, for example, an attribute indicating that the background color for characters is red and the characters are thick. In Fig. 4, the first attribute is represented by using a frame 323 with a thick solid line. This means that the hallucination probability level of the word is the highest.

In Fig. 4, a second attribute is assigned to the words "year" and "very popular". The second attribute may be, for example, an attribute indicating that the background color for characters is orange. In Fig. 4, the second attribute is represented by using a frame 324 with the thin solid line. This means that the respective hallucination probability levels of the words are the second lowest.

Further, any attribute is not assigned to the other words in Fig. 4. This means that the hallucination probability levels of the other words are the lowest.

The hallucination probability is divided into three levels in the following description but may be divided into four or more levels.

Assigning an attribute based on the hallucination probability of a word for each word is an example of assigning a character attribute associated with an element in text data to an attribute based on error possibility information.

In the description above, the attribute based on the hallucination probability is assigned to the two or more words in the output text, and the words constituting the output text may also include a word not assigned an attribute based on the hallucination probability.

For example, the attribute based on the hallucination probability may be assigned to a predetermined type of word of the words constituting the output text. In this case, and the predetermined type of word may be at least one of a word of a predetermined part of speech or a word composed of one or more numerals. The predetermined part of speech may be a noun, a verb, an adjective, a nominal adjective, or the like.

Alternatively, the attribute based on the hallucination probability may be assigned to a word other than the predetermined type of word among the words constituting the output text. In this case, the predetermined type of word may be a word of a predetermined part of speech. The predetermined parts of speech may be a conjunction, a particle, an auxiliary verb, or the like. The predetermined type of word may also be at least one of an antonym or a translated word.

In contrast, the attribute based on the hallucination probability may be assigned to all of the words constituting the output text.

Internal processing performed by the server 40 for performing displaying on the user terminal 10 as described above will then be described.

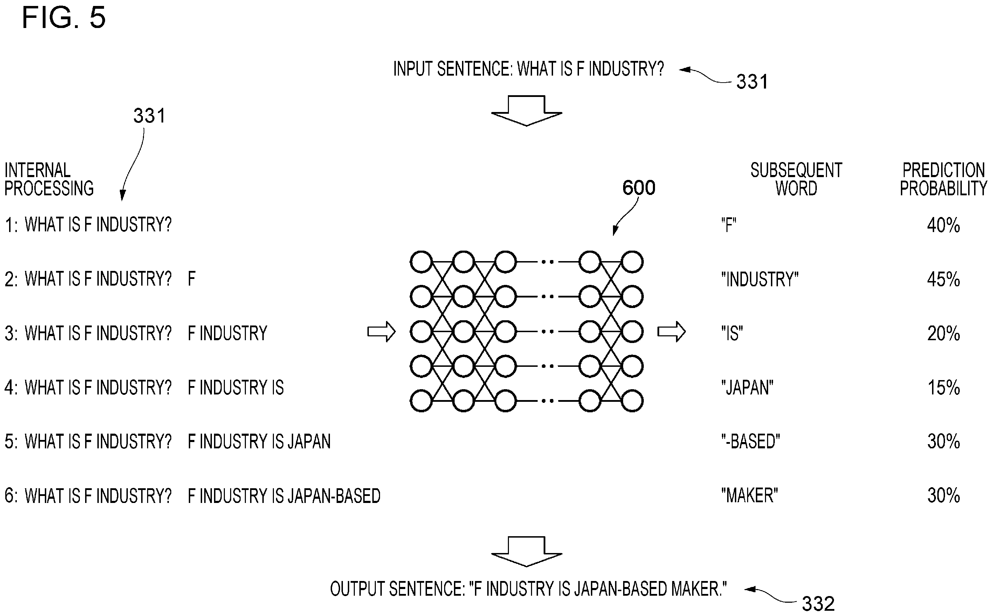

Fig. 5 is a schematic view illustrating the internal processing as described above.

First, the user inputs text 331. The text 331 reads as "What is F Industry?"

The server 40 then predicts that a word subsequent to the text 331 is "F". The prediction probability of the word "F" subsequent to the text 331 is 40%.

The server 40 then predicts that a word subsequent to the text 331 and the word "F" is "Industry". The prediction probability of the word "Industry" subsequent to the text 331 and the word "F" is 45%.

The server 40 then predicts that a word subsequent to the text 331, the words "F" and "Industry" is "is". The prediction probability of the word "is" subsequent to the text 331 and the words "F" and "Industry" is 20%.

The server 40 then predicts that a word subsequent to the text 331 and the words "F", "Industry", "is" is "Japan". The prediction probability of the word "Japan" subsequent to the text 331 and the words "F", "Industry", and "is" is 15%.

The server 40 then predicts that a word subsequent to the text 331 and the words "F", "Industry", "is", and "Japan" is "-based". The prediction probability of the word "-based" subsequent to the text 331 and the words "F", "Industry", "is", and "Japan" is 30%.

The server 40 then predicts that a word subsequent to the text 331 and the words "F", "Industry", "is", "Japan", and "-based" is "maker". The prediction probability of the word "maker" subsequent to the text 331 and the words "F", "Industry", "is", "Japan", and "-based" is 30%.

The server 40 outputs text 332 in which the text 331 is excluded from text finally acquired after repeating the processing as described above. The text 332 reads as "F Industry is a Japan-based maker."

Focus is placed on the sixth internal processing step in the internal processing illustrated in Fig. 5. That is, focus is placed on the step of predicting that the word subsequent to "F Industry is a Japan-based" is "maker". To perform such prediction, the LLM 600 is required to have knowledge that "F Industry" is "maker". In knowledge neuron analysis, a neuron in the LLM 600 associated with the knowledge as described above is searched for. The knowledge neuron analysis is described in the thesis "Locating and Editing Factual Associations in GPT (Meng etal., 2022)".

In this exemplary embodiment, the knowledge neuron analysis is applied to hallucination detection.

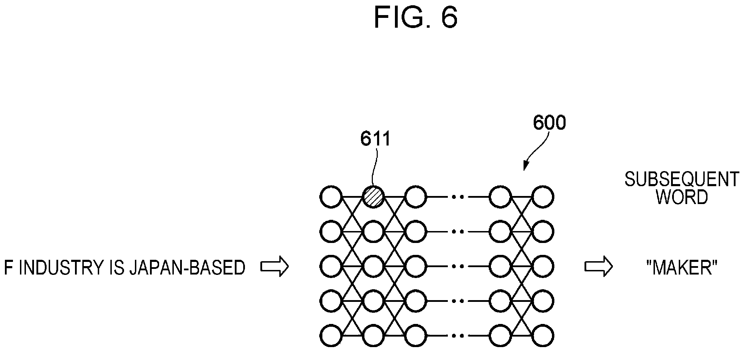

Fig. 6 is a schematic view illustrating word prediction without the occurrence of hallucination. In Fig. 6, the server 40 predicts that the word subsequent to "F Industry is a Japan-based" is "maker". In this case, a knowledge neuron associated with the knowledge that "F Industry" is "maker" has been identified as a neuron 611.

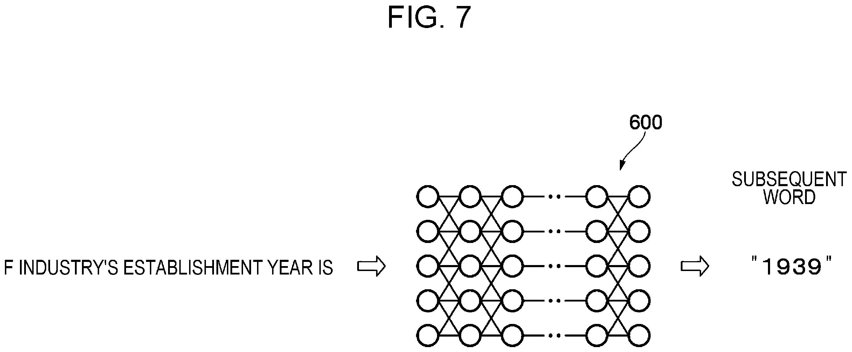

Fig. 7 is a schematic view illustrating word prediction in the occurrence of hallucination. In Fig. 7, the server 40 predicts that the word subsequent to "F Industry's establishment year is" is "1939". In this case, a knowledge neuron associated with knowledge that "F Industry's establishment year" is "1939" is not identified.

Hence, in this exemplary embodiment, the analysis is performed for each word. If a knowledge neuron is not located, the word is determined as hallucination.

Assume that the prediction probability of the word "maker" subsequent to "F Industry is a Japan-based" is 30%. In contrast, the prediction probability of the word "1939" subsequent to "F Industry's establishment year is" is 85% on occasions. Accordingly, the prediction probability of a subsequent word has no relation to whether hallucination has occurred. In other word, it is not possible to determine hallucination from only the prediction probability.

### Functional Configuration of Text Generation System

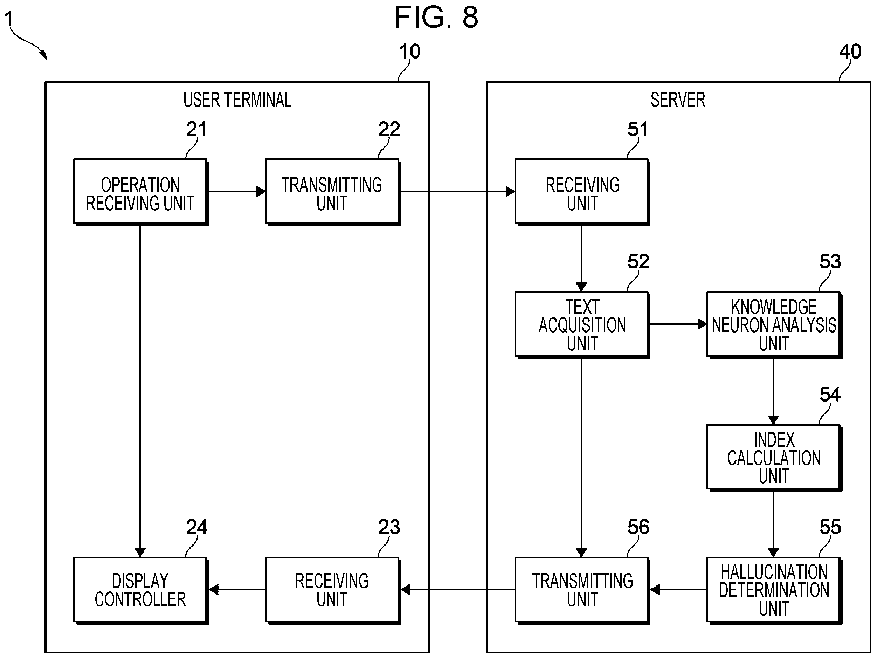

Fig. 8 is a block diagram illustrating an example functional configuration of the text generation system 1 in this exemplary embodiment.

First, an example functional configuration of the user terminal 10 will be described. As illustrated in Fig. 8, the user terminal 10 includes an operation receiving unit 21, a transmitting unit 22, a receiving unit 23, and a display controller 24.

The operation receiving unit 21 receives an operation by the user to input text with, for example, the touch panel 14 (see Fig. 2). Hereinafter, the text input by the user is referred to as input text. That is, the operation receiving unit 21 receives the input text, for example, from the touch panel 14.

The transmitting unit 22 transmits the input text received by the operation receiving unit 21 to the server 40 by using the radio circuit 18 (see Fig. 2).

The receiving unit 23 receives text to be output from the user terminal 10 from the server 40 by using the radio circuit 18. Hereinafter, the text to be output from the user terminal 10 is referred to as output text.

The receiving unit 23 also receives hallucination information regarding a word in the output text from the server 40 by using the radio circuit 18. The hallucination information is information indicating the degree of possibility that the word is hallucination. The receiving unit 23 may receive the hallucination information in a state of being separated from the output text. As the hallucination information, annotation information in which the word is associated with the possibility that the word is the hallucination is exemplified. Alternatively, the receiving unit 23 may receive the hallucination information in a state of being attached to the word in the output text. As the hallucination information, the attribute assigned to the word illustrated in Fig. 4 is exemplified.

The display controller 24 receives the input text received by the operation receiving unit 21. The display controller 24 then performs control to display the input text, for example, on the touch panel 14.

The display controller 24 also receives the output text and the hallucination information received by the receiving unit 23 from the server 40. The display controller 24 then performs control to display the output text and the hallucination information, for example, on the touch panel 14. If the receiving unit 23 receives the hallucination information the state of being separated from the output text, the display controller 24 then performs control to display the hallucination information separately from the output text. As the hallucination information, the annotation information in which the word is associated with the possibility that the word is hallucination is exemplified. Alternatively, if the receiving unit 23 receives the hallucination information in the state of being attached to the word in the output text, the display controller 24 then performs control to display the hallucination information in the state of being attached to the word in the output text. As the hallucination information, the attribute assigned to the word illustrated in Fig. 4 is exemplified.

An example functional configuration of the server 40 will then be described. As illustrated in Fig. 8, the server 40 includes a receiving unit 51, a text acquisition unit 52, and a knowledge neuron analysis unit 53. The server 40 also includes an index calculation unit 54, a hallucination determination unit 55, and a transmitting unit 56.

The receiving unit 51 receives the input text from the user terminal 10. In this exemplary embodiment, the input text is used as an example of input data. In addition, in this exemplary embodiment, processing by the receiving unit 51 is performed as an example of acquiring the input data.

The text acquisition unit 52 acquires output text serving as an answer to the input text received by the receiving unit 51. Specifically, the text acquisition unit 52 acquires the output text generated by the AI on the basis of the input text by using the LLM. In this exemplary embodiment, as an example of output data generated by AI in response to input data or data generated by the AI on the basis of the LLM. In addition, in this exemplary embodiment, processing by the text acquisition unit 52 is performed as an example of acquiring the output data.

The knowledge neuron analysis unit 53 performs the knowledge neuron analysis when the AI generates the output text by using the LLM. The knowledge neuron analysis is analyzing to what degree a neuron in the LLM contributes to the prediction of a subsequent word in the output text. The knowledge neuron analysis unit 53 then records the results of the knowledge neuron analysis as a heat map. The heat map is information in which prediction probabilities are associated with words in the output text. Each prediction probabilities indicate to what degree neurons in the layers contribute to the prediction of the words. In this exemplary embodiment, the heat map is used as an example of association information in which a contribution probability is associated with an element of multiple elements in output data. The contribution probability is that one of neurons in multiple layers for the element contributes to decision of a subsequent element that is subsequent to the multiple elements.

The index calculation unit 54 calculates an identifiability index indicating the degree of the possibility of the identifiability of a knowledge neuron associated with a word in the LLM. Specifically, the index calculation unit 54 calculates the identifiability index on the basis of the heat map recorded by the knowledge neuron analysis unit 53. In this exemplary embodiment, the identifiability index is used as an example of the identifiability information indicating the degree of the identifiability of a knowledge neuron associated with an element in the LLM. In addition, in this exemplary embodiment, the processing by the index calculation unit 54 is performed as an example of acquiring the identifiability information on the basis of the association information.

The hallucination determination unit 55 receives the identifiability index calculated by the index calculation unit 54. The hallucination determination unit 55 then determines whether the word is hallucination on the basis of the identifiability index. The hallucination determination unit 55 generates hallucination information regarding the word in the output text on the basis of the determination result. In this exemplary embodiment, the hallucination information is used as an example of error possibility information generated on the basis of the identifiability information.

For example, if the identifiability index indicates that the identifiability of the knowledge neuron associated with the word is low, the hallucination determination unit 55 then determines that the word is likely to be hallucination. The hallucination determination unit 55 generates hallucination information indicating that the word is likely to be hallucination. In this exemplary embodiment, the processing by the hallucination determination unit 55 is performed as an example of generating error possibility information indicating that the possibility that the element includes an error by AI is high if the identifiability information indicates that the identifiability of the knowledge neuron associated with the element in the LLM is low.

In contrast, if the identifiability index indicates that the identifiability of the knowledge neuron associated with the word is high, the hallucination determination unit 55 then determines that the word is unlikely to be hallucination. The hallucination determination unit 55 generates hallucination information indicating that the word is unlikely to be hallucination.

The transmitting unit 56 receives the output text acquired by the text acquisition unit 52 and the hallucination information generated by the hallucination determination unit 55. The transmitting unit 56 then transmits the output text and the hallucination information to the user terminal 10. In this exemplary embodiment, the processing by the transmitting unit 56 is performed as an example of outputting output data and error possibility information.

At this time, the transmitting unit 56 may transmit the hallucination information to the user terminal 10 in the state of being separated from the output text.

Alternatively, the transmitting unit 56 may transmit the hallucination information to the user terminal 10 in the state of being attached to the word in the output text. In this exemplary embodiment, the processing by the transmitting unit 56 is performed as an example of outputting the output data and the error possibility information in the state where the error possibility information is attached to an element.

The content of processing by the knowledge neuron analysis unit 53 will be described in detail.

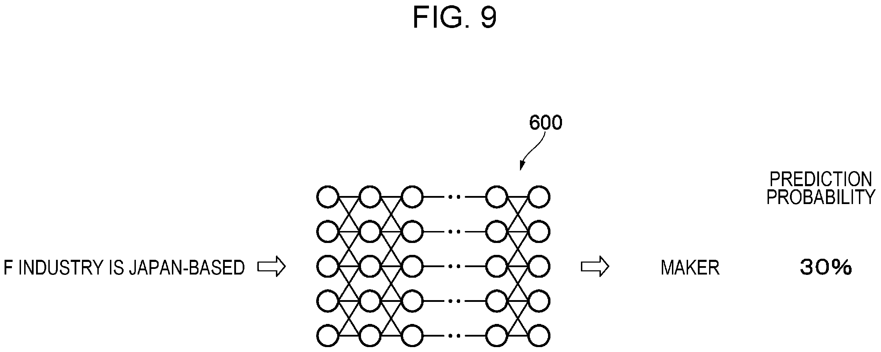

Figs. 9 to 11C are each a schematic view illustrating a process for calculation for knowledge neuron analysis by the knowledge neuron analysis unit 53. A process for predicting that a word subsequent to "F Industry is a Japan-based" is "maker" is illustrated.

Fig. 9 illustrates the word prediction process with the LLM 600 in a normal state. In this case, the prediction probability of the word "maker" subsequent to "F Industry is a Japan-based" is 30%.

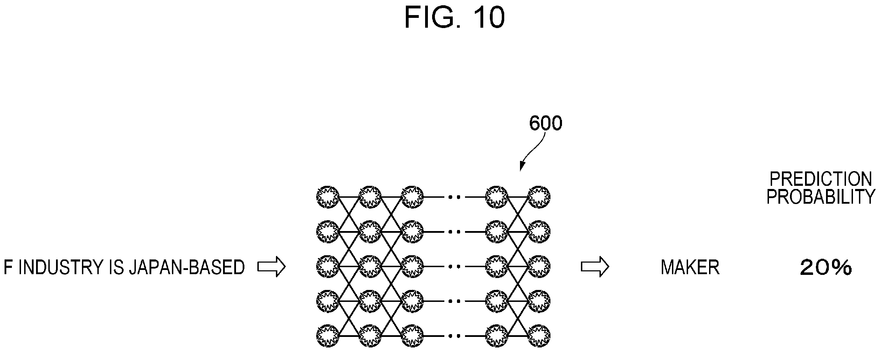

Fig. 10 illustrates the word prediction process with the LLM 600 having all the neurons with noise applied thereto. In this case, the prediction probability of the word "maker" subsequent to "F Industry is a Japan-based" is 20%.

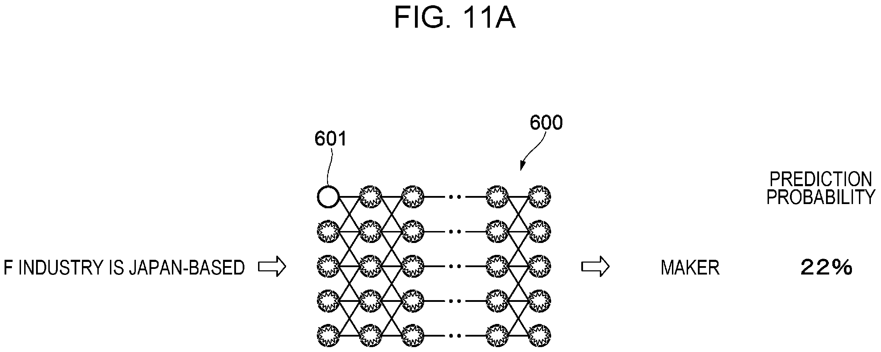

Figs. 11A to 11C illustrate the word prediction process with the LLM 600 having a neuron with noise applied thereto. In the processes, one of the neurons with noise applied thereto in Fig. 10 is replaced with a neuron without noise.

In Fig. 11A, a neuron 601 is replaced with a neuron without noise. In this case, the prediction probability of the word "maker" subsequent to "F Industry is a Japan-based" is 22%.

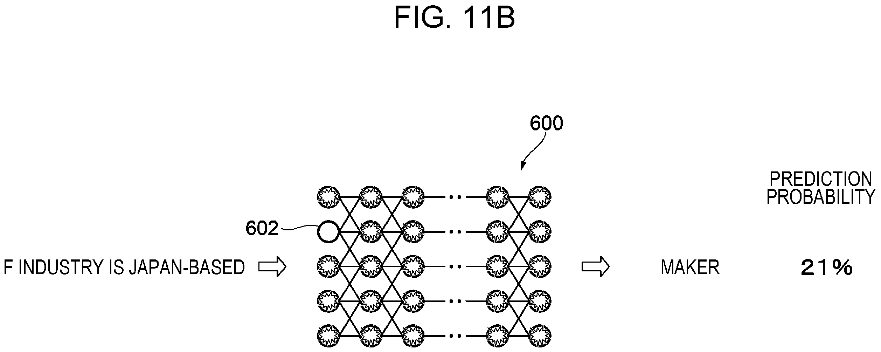

In Fig. 11B, a neuron 602 is replaced with a neuron without noise. In this case, the prediction probability of the word "maker" subsequent to "F Industry is a Japan-based" is 21%.

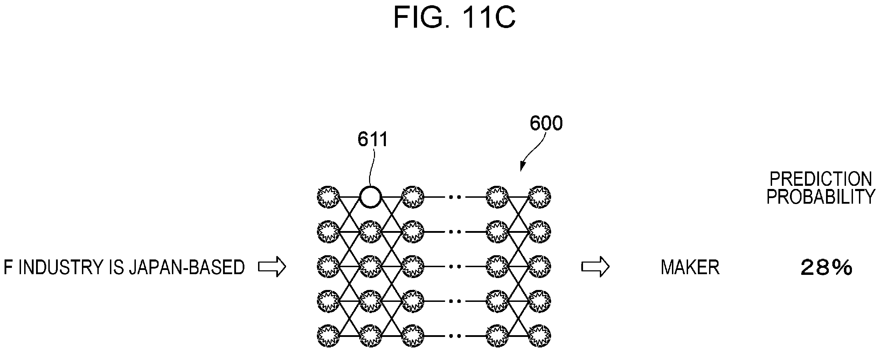

In Fig. 11C, the neuron 611 is replaced with a neuron without noise. In this case, the prediction probability of the word "maker" subsequent to "F Industry is a Japan-based" is 28%.

The prediction probability in Fig. 11C is herein remarkably high. The neuron 611 is thus considered to be a knowledge neuron.

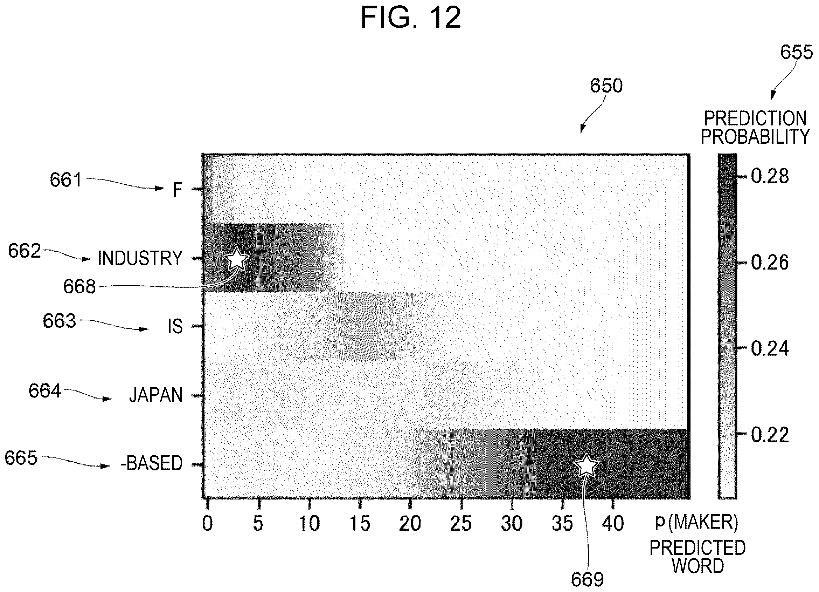

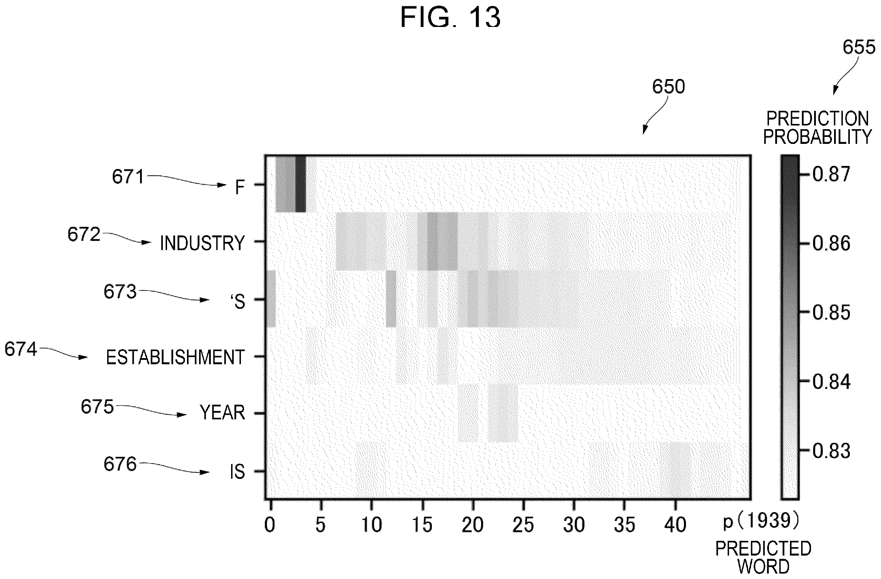

Figs. 12 and 13 are each a schematic view illustrating a process for recording the results of the knowledge neuron analysis by the knowledge neuron analysis unit 53. The processes for recording the knowledge neuron analysis results as a heat map 650 are herein illustrated.

In the heat map 650, the vertical axis represents words constituting text. As the words, tokens acquired by dividing the text with a tokenizer may be used.

In the heat map 650, the horizontal axis represents layers in the neural network of the LLM 600. Although the layers depend on the type of a used document generation model, there are herein the 0th layer to the 46th layer.

A prediction probability of a subsequent word following a word in the text is represented at the intersection of the word along the vertical axis with one of layers along the horizontal axis. The prediction probability is the prediction probability of the subsequent word in a case where a neuron in the layer along the horizontal axis corresponding to the word along the vertical axis is replaced with a neuron without noise. The prediction probability is represented in the depth of the color of a longitudinal rectangle area for the word along the vertical axis associated with the layer along the horizontal axis. A relationship between the prediction probability and the depth of the color of the longitudinal rectangle area is represented by a guide 655.

Fig. 12 illustrates the heat map 650 without the occurrence of hallucination. In Fig. 12, the vertical axis represents words 661 to 665 constituting "F Industry is a Japan-based". A prediction probability p(maker) of the word "maker" is represented at the intersection of each word along the vertical axis with one of layers along the horizontal axis. It is understood that knowledge neurons are present around stars 668 and 669 in the heat map 650 from the depth of the color of the longitudinal rectangle areas.

Fig. 13 illustrates the heat map 650 in the occurrence of the hallucination. In Fig. 13, the vertical axis represents words 671 to 676 constituting "F Industry's establishment year is". A prediction probability p(1939) is represented at the intersection of each word along the vertical axis with one of layers along the horizontal axis. In the heat map 650, a knowledge neuron is not located from the depth of the color of the longitudinal rectangle area.

The content of processing by the index calculation unit 54 will then be described in detail.

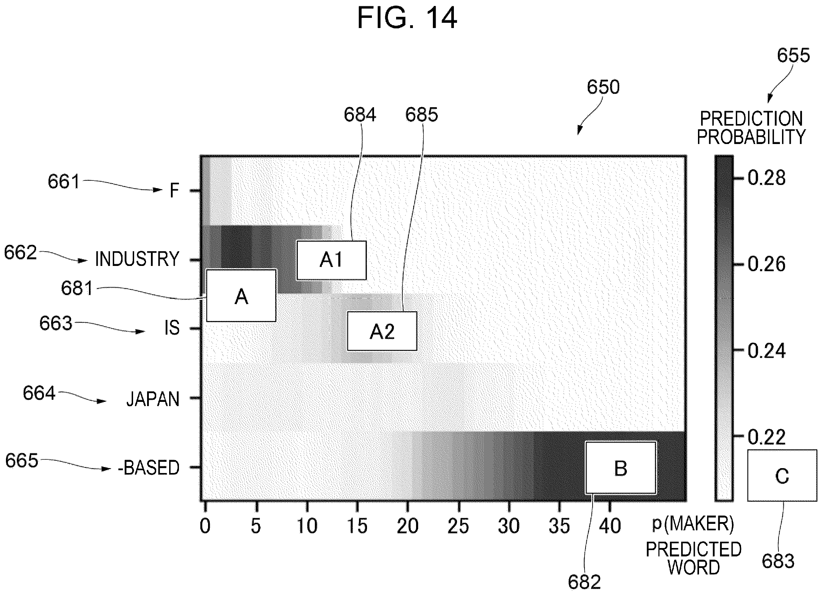

Fig. 14 is a view illustrating indexes calculated by the index calculation unit 54.

The heat map 650 without the occurrence of the hallucination illustrated in Fig. 12 has three features.

The first feature is that there is only one high prediction probability area in the upper left part of the heat map 650. The first feature may be that, for example, there is only one high prediction probability area in the 0th to 20th layers except the lowest lateral portion. Although the left side layers depend on the type of a used document generation model, the 0th to 20th layers are herein taken as an example of the left side layers. An index representing the first feature is hereinafter "A". Fig. 14 thus illustrates a rectangle 681 denoted by "A" at the location related to the first feature.

The second feature is that prediction probabilities are high in the right portion of the lowest lateral portion in the heat map 650. The second feature may be that, for example, the prediction probabilities in the 35th to 46th layers in the lowest lateral portion are high. Although the right side layers depend on the type of a used document generation model, the 35th to 46th layers are taken as an example of the right side layers. An index representing the second feature is hereinafter "B". Fig. 14 thus illustrates a rectangle 682 denoted by "B" at the location related to the second feature.

The third feature is that there is a large difference between the high prediction probability area and a low prediction probability area. An index representing the third feature is hereinafter "C". Fig. 14 thus illustrates a rectangle 683 denoted by "C" for the guide 655.

As described above, the greater the values of indexes A, B, and C, the lower the hallucination probability. On the contrary, the smaller the value of the indexes A, B, and C, the higher the hallucination probability.

First, the index calculation unit 54 calculates the index A.

The index calculation unit 54 sets, as an index A1, the highest one of averages of prediction probabilities in five consecutive layers of the 0th to 20th layers except the lowest lateral portion. Fig. 14 thus illustrates a rectangle 684 denoted by "A1" at the location related to the index.

The index calculation unit 54 sets, as an index A2, the average of the prediction probabilities of five consecutive layers of the 0th to 20th layers except the lowest lateral portion is the second highest. Fig. 14 illustrates a rectangle 685 denoted by "A2" at the location related to the index.

The index calculation unit 54 sets, as MAX, the maximum value of prediction probabilities in all of the layers in all of the lateral portions.

The index calculation unit 54 calculates the index A in accordance with "A = (A1 - A2)/MAX".

The division by MAX at the last is performed for standardization, that is, to uniform possible upper limits of the index A into 1.

The index A is herein a value calculated on the basis of the index A1 and the index A2 in accordance with "A = (A1 - A2)/MAX". However, the index A is not limited to such a value. The index A may take on any value based on a prediction probability of a layer associated with a lateral portion except the lowest lateral portion in the heat map 650. In this sense, the index A is an example of information based on the probability of a layer associated with an element except the last element of the multiple elements in the association information.

The index calculation unit 54 then calculates the index B.

The index calculation unit 54 sets, as an index B', the average of prediction probabilities in the 35th to 46th layers in the lowest lateral portion.

The index calculation unit 54 sets, as MEAN, the average of the prediction probabilities in all of the layers in all of the lateral portions.

The index calculation unit 54 sets, as MAX, the maximum value in the prediction probabilities in all of the layers in all of the lateral portions.

The index calculation unit 54 calculates the index B in accordance with "B = (B' - MEAN)/MAX" .

The division by MAX at the last is performed for standardization, that is, to uniform possible upper limits of the index B into 1.

The index B is herein a value calculated on the basis of the index B' in accordance with "B = (B' - MEAN)/MAX". However, the index B is not limited to such a value. The index B may take any value based on a prediction probability in any layer associated with the lowest lateral portion in the heat map 650. In this sense, the index B is an example of information based on a probability of a layer associated with the last element of the multiple elements in the association information.

The index calculation unit 54 then calculates the index C.

The index calculation unit 54 sets, as MEAN, the average in the prediction probabilities in all of the layers in all of the lateral portions.

The index calculation unit 54 sets, as MAX, the maximum value in the prediction probabilities in all of the layers in all of the lateral portions.

The index calculation unit 54 calculates the index C in accordance with "C = (MAX - MEAN)/MAX" .

The division by MAX at the last is performed for standardization, that is, to uniform possible upper limits of the index C into 1.

The index C is herein a value calculated in accordance with "C = (MAX - MEAN)/MAX". However, the index C is not limited to such a value. The index C may be any value based on the maximum prediction probability in prediction probabilities in a layer associated with a lateral portion in the heat map 650. In this sense, the index C is an example of information based on the maximum probability of a probability of a layer associated with an element of the multiple elements in the association information.

Thereafter, the index calculation unit 54 calculates an index TRUTHFUL in accordance with "TRUTHFUL = A + B + C".

The index TRUTHFUL is herein a value calculated in accordance with "TRUTHFUL = A + B + C". However, the index TRUTHFUL is not limited to such a value.

The index TRUTHFUL may be any value based on the index A. In this case, the index TRUTHFUL is an example of the information based on the probability of a layer associated with an element except the last element of the multiple elements in the association information.

The index TRUTHFUL may also be any value based on the index B. In this case, the index TRUTHFUL is an example of the information based on the probability of a layer associated with the last element of the multiple elements in the association information.

The index TRUTHFUL may also be any value based on the index C. In this case, the index TRUTHFUL is an example of the information based on the maximum probability of a probability of a layer associated with an element of the multiple elements in the association information.

The index TRUTHFUL does not have to be the sum of the indexes A, B, and C. The index TRUTHFUL may be, for example, a weighted sum obtained by weighting one or more indexes to be valued among the indexes A, B, and C. Typically, the index TRUTHFUL may be any value based on the index A, the index B, and the index C. In this case, the index TRUTHFUL is an example of information based on the probability of a layer associated with an element except the last element of the multiple elements in the association information, the probability of a layer associated with the last element of the multiple elements in the association information, and the maximum probability of a probability of a layer associated with an element of the multiple elements in the association information.

Accordingly, the greater the value of the index TRUTHFUL, the lower the hallucination probability. The smaller the value of the index TRUTHFUL, the higher the hallucination probability.

If the index calculation unit 54 calculates the indexes A, B, and C from the heat map 650 illustrated in Fig. 12 by using a document generation model, and if the index A, the index B, and the index C are respectively 0.151, 0.215, and 0.233 in this case, the index TRUTHFUL obtained by adding up these is then 0.599.

In contrast, if the index calculation unit 54 calculates the indexes A, B, and C from the heat map 650 illustrated in Fig. 13 by using a document generation model, and if the index A, the index B, and the index C are respectively 0.020, 0.022, and 0.064 in this case, the index TRUTHFUL obtained by adding up these is then 0.106.

The content of processing by the hallucination determination unit 55 will then be described in detail.

As described above, the index TRUTHFUL without the occurrence of hallucination is, for example, 0.599. The index TRUTHFUL in the occurrence of hallucination is, for example, 0.106.

The hallucination determination unit 55 determines whether the index TRUTHFUL is lower than 0.2. If the index TRUTHFUL is lower than 0.2, the hallucination determination unit 55 generates the first hallucination information. The hallucination determination unit 55 thereby indicates that the hallucination probability is at the highest level.

The hallucination determination unit 55 also determines whether the index TRUTHFUL is lower than 0.5. If the index TRUTHFUL is lower than 0.5, the hallucination determination unit 55 generates the second hallucination information. The hallucination determination unit 55 thereby indicates that the hallucination probability is at the second highest level.

Further, the hallucination determination unit 55 determines whether the index TRUTHFUL is greater than or equal to 0.5. If the index TRUTHFUL is greater than or equal to 0.5, the hallucination determination unit 55 does not generate the hallucination information. The hallucination determination unit 55 thereby indicates that the hallucination probability is at the lowest level.

### Example Operations by Server

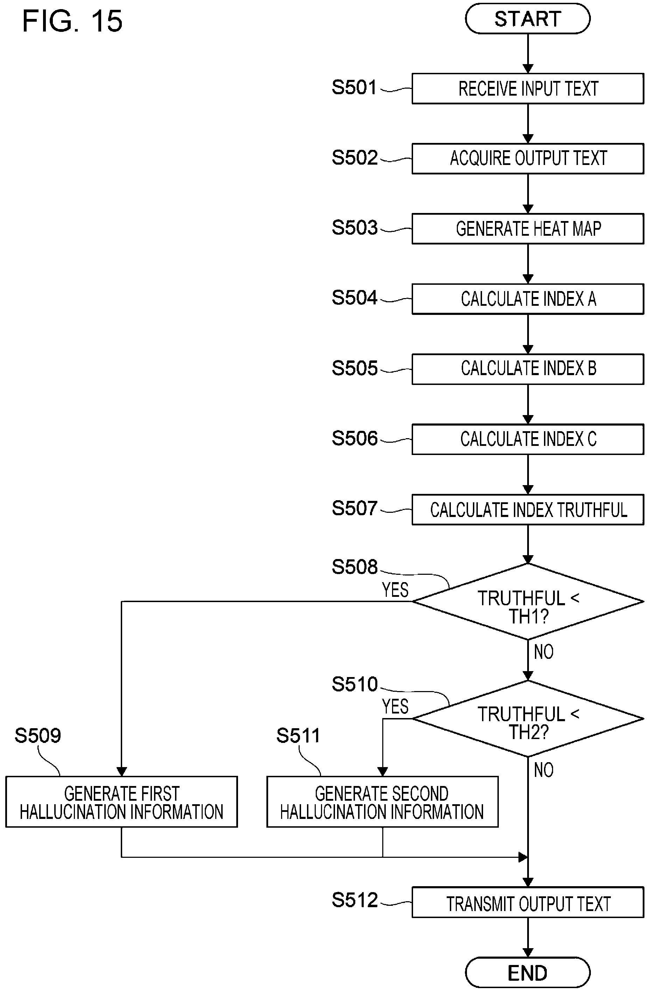

Fig. 15 is a flowchart illustrating example operations by the server 40 included in the text generation system 1 in this exemplary embodiment.

As illustrated in Fig. 15, in the server 40, the receiving unit 51 first receives input text from the user terminal 10 (step S501).

The text acquisition unit 52 then acquires output text serving as an answer to the input text received in step S501 (step S502). Specifically, the text acquisition unit 52 acquires the output text generated on the basis of the input text by the AI by using the LLM 600.

The knowledge neuron analysis unit 53 then generates the heat map 650 on the basis of the results of the knowledge neuron analysis (step S503). The knowledge neuron analysis is performed when the AI generates the output text by using the LLM 600. The knowledge neuron analysis is analyzing to what degree a neuron in the LLM contributes to the prediction of a subsequent word in the output text.

The index calculation unit 54 then calculates the index A from the heat map 650 generated in step S503 (step S504). For example, the index A may be an index indicating that there is only one high prediction probability area in the upper left part of the heat map 650.

The index calculation unit 54 also calculates the index B from the heat map 650 generated in step S503 (step S505). For example, the index B may be an index indicating that the prediction probabilities are high in the right portion of the lowest lateral portion in the heat map 650.

Further, the index calculation unit 54 calculates the index C from the heat map 650 generated in step S503 (step S506). For example, the index C may be an index indicating that there is a large difference between the high prediction probability area and the low prediction probability area.

The index calculation unit 54 thereby calculates the index TRUTHFUL (step S507). For example, the index calculation unit 54 may set, as the index TRUTHFUL, the sum of the indexes A, B, and C calculated in steps S504 to 50.

The hallucination determination unit 55 then determines whether the index TRUTHFUL is lower than a threshold TH1 (step S508). For example, the threshold TH1 may be 0.2.

If it is determined that the index TRUTHFUL is lower than the threshold TH1 in step S508, the hallucination determination unit 55 then generates the first hallucination information (step S509). The first hallucination information is information indicating that the hallucination probability is at the highest level.

The hallucination determination unit 55 also determines whether the index TRUTHFUL is lower than a threshold TH2 (step S510). The threshold TH2 is greater than the threshold TH1. For example, the threshold TH2 may be 0.5.

If it is determined that the index TRUTHFUL is lower than the threshold TH2 in step S510, the hallucination determination unit 55 then generates the second the hallucination information (step S511). The second the hallucination information is information indicating that the hallucination probability is at the second highest level.

Thereafter, the transmitting unit 56 transmits output text to the user terminal 10 (step S512). The output text acquired in step S502 is preferably used as the output text. The output text may have the hallucination information attached thereto. That is, if it is determined that the index TRUTHFUL is lower than the threshold TH1 in step S508, the first hallucination information generated in step S509 may be attached to the output text in this case. If it is determined that the index TRUTHFUL is lower than the threshold TH2 in step S510, the second the hallucination information generated in step S511 may be attached to the output text in this case. Further, if it is determined that the index TRUTHFUL is greater than or equal to the threshold TH2 in step S510, the hallucination information does not have to be attached to the output text in this case.

### Modifications

In the description above, the server 40 generates the hallucination information regarding a word in the output text by analyzing the entire output text. However, the server 40 may generate the hallucination information regarding the word in the output text by analyzing a part prior to the word in the output text.

In addition, timing when the user terminal 10 displays the hallucination information is not referred to in the description above. The user terminal 10 may display the hallucination information simultaneously or serially while the AI is generating the output text.

The hallucination has been described as an event at which the AI outputs a factuality error having content inconsistent with the fact but is not limited to this.

For example, the hallucination may be an event at which the AI outputs a factuality error having content indicating that a fact serving as an answer is not present.

This exemplary embodiment is also applicable to a case where the hallucination is a fidelity error. The fidelity error includes an event at which content inconsistent with an instruction to the LLM is output. The fidelity error also includes an event at which content inconsistent with information given to the LLM.

### Processor

In this exemplary embodiment, the processing steps are performed by any computer. The computer may perform the processing steps by using a processor serving as hardware, a program serving as software, or combination of these. In this case, a processor is configured to perform various processing steps in this exemplary embodiment in cooperation with the program and may function as a unit or means in this exemplary embodiment. The order in which the processor performs the processing steps is not limited to the described order and may be changed appropriately. The computer may be a general purpose computer, an application specific computer, a workstation, or another system capable of performing the various processing steps.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphic processing unit (GPU), or a neural processing unit (NPU). Regarding the type of the hardware, different types of hardware may be combined. If multiple pieces of hardware are configured to perform one or more processing steps by a processor, the multiple pieces of hardware may be present in apparatuses physically away from each other and may be present in one apparatus. In each of exemplary embodiments, the order in which the processor performs the processing steps is not limited to the order described above and may be changed appropriately. The hardware is composed of electric circuitry in which circuit elements such as semiconductor devices are combined, or the like.

Further, the program may be firmware or software such as microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may connected to another code segment or a hardware circuit by transmitting and/or receiving information, data, an argument, a parameter, or memory content.

### Program

The present disclosure is applicable to a program and a program product.

For example, the program and the program product to which this exemplary embodiment is applied causes a computer to implement a function of acquiring input data, a function of acquiring output data generated by AI in response to the input data, and a function of outputting the output data and error possibility information indicating the degree of possibility that an element in the output data includes an error by the AI.

The program to which this exemplary embodiment is applied may be provided in communication means. The program to which this exemplary embodiment is applied may also be provided in such a manner as to be stored in a recording medium such as a CD-ROM.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system includes:
   a processor configured to:
   acquire input data;
   acquire output data generated by artificial intelligence in response to the input data; and
   output the output data and error possibility information indicating a degree of possibility that an element of elements in the output data includes an error by the artificial intelligence.
(((2))) In the information processing system according to (((1))),
   the processor is configured to output the output data and the error possibility information that is attached to the element.
(((3))) In the information processing system according to (((2))),
   the output data is text data, and
   the processor is configured to attach the error possibility information to the element in the text data by setting an attribute of a character corresponding to the element as an attribute based on the error possibility information.
(((4))) In the information processing system according to any one of (((1))) to (((3))),
   the elements are all of the elements in the output data.
(((5))) In the information processing system according to any one of (((1))) to (((3))),
   the element is a predetermined type of element of multiple elements in the output data.
(((6)))
   In the information processing system according to (((5))),
   the output data is text data, and
   the predetermined type of element is at least one of an element serving as a predetermined part of speech or an element composed of a numeral.
(((7))) In the information processing system according to any one of (((1))) to (((3))),
   the element is an element other than a predetermined type of element of multiple elements in the output data.
(((8))) In the information processing system according to (((7))),
   the output data is text data, and
   the predetermined type of element is an element serving as a predetermined part of speech.
(((9))) In the information processing system according to (((7))),
   the output data is text data, and
   the predetermined type of element is at least one of an element serving as an antonym or a translation element.
(((10))) In the information processing system according to any one of (((1))) to (((9))),
   the processor is configured to:
   acquire, as the output data, data generated by the artificial intelligence on a basis of a large language model; and
   output, as the error possibility information, information generated on a basis of identifiability information indicating a degree of identifiability of a knowledge neuron in the large language model, the knowledge neuron being associated with the element.
(((11))) In the information processing system according to (((10))),
   the processor is configured to: in response to the identifiability information indicating that the identifiability of the knowledge neuron associated with the element in the large language model is low, generate error possibility information indicating that the possibility that the element includes an error by the artificial intelligence is high.
(((12))) In the information processing system according to (((10))),
   the processor is configured to acquire the identifiability information on a basis of association information in which a contribution probability is associated with an element of multiple elements in the output data, the contribution probability being that one of neurons in multiple layers for the element contributes to decision of a subsequent element that is subsequent to the multiple elements.
(((13))) In the information processing system according to (((12))),
   the processor is configured to acquire, as the identifiability information, information based on a probability of a layer of the layers that is associated with an element except a last element of the multiple elements in the association information.
(((14))) In the information processing system according to (((12))),
   the processor is configured to acquire, as the identifiability information, information based on a probability of a layer of the layers that is associated with a last element of the multiple elements in the association information.
(((15))) In the information processing system according to (((12))),
   the processor is configured to acquire, as the identifiability information, information based on a maximum probability of a probability of a layer of the layers that is associated with an element of the multiple elements in the association information.
(((16))) In the information processing system according to (((12))), the processor is configured to:
   acquire, as the identifiability information,
   information based on
      a probability of a layer of the layers that is associated with an element except a last element of the multiple elements in the association information,
      a probability of a layer of the layers that is associated with a last element of the multiple elements in the association information, and
      a maximum probability of a probability of a layer of the layers that is associated with an element of the multiple elements in the association information.
(((17))) A program causes a computer to execute a process including:
   acquiring input data;
   acquiring output data generated by artificial intelligence in response to the input data; and
   outputting the output data and error possibility information indicating a degree of possibility that an element in the output data includes an error by the artificial intelligence.

According to the disclosure in (((1))), the user may recognize the degree of the possibility that the element in the output data includes an error by the artificial intelligence.

According to the disclosure in (((2))), the user may easily recognize the association between the element in the output data and the degree of the possibility that an error by the artificial intelligence is included.

According to the disclosure in (((3))), the user may recognize the association between the element in the output data and the degree of the possibility that an error by the artificial intelligence is included at a glance.

According to the disclosure in (((4))), the user may recognize the degree of the possibility that the element includes an error by the artificial intelligence for all of the elements of the output data.

According to the disclosure in (((5))), the user may recognize the degree of the possibility that the element includes an error by the artificial intelligence for the predetermined type of element in the output data.

According to the disclosure in (((6))), the user may recognize the degree of the possibility that the element includes an error by the artificial intelligence for at least one of the element serving as the predetermined part of speech in the output data or the element composed of a numeral.

According to the disclosure in (((7))), the user may recognize the degree of the possibility that the element includes an error by the artificial intelligence for the element other than the predetermined type of element in the output data.

According to the disclosure in (((8))), the user may recognize the degree of the possibility that the element includes an error by the artificial intelligence for the element other than the element serving as the predetermined part of speech in the output data.

According to the disclosure in (((9))), the user may recognize the degree of the possibility that the element includes an error by the artificial intelligence for an element other than the at least one of the element serving as the antonym or the translation element in the output data.

According to the disclosure in (((10))), the user may recognize the degree of the possibility that the element in the output data includes an error by the artificial intelligence without the need for an external database.

According to the disclosure in (((11))), the user may recognize that if the identifiability of the knowledge neuron associated with the element in the large language model is low, the possibility that the element in the output data includes an error by the artificial intelligence is high.

According to the disclosure in (((12))), the degree of the identifiability of the knowledge neuron associated with the element in the large language model may be recognized easily.

According to the disclosure in (((13))), the degree of the identifiability of the knowledge neuron associated with the element in the large language model may be recognized in view of the probability of the layer associated with the element except the last element in the output data.

According to the disclosure in (((14))), the degree of the identifiability of the knowledge neuron associated with the element in the large language model may be recognized in view of the probability of the layer associated with the last element in the output data.

According to the disclosure in (((15))), the degree of the identifiability of the knowledge neuron associated with the element in the large language model may be recognized in view of information based on a maximum probability of a probability of a layer of the layers that is associated with an element of the output data.

According to the disclosure in (((16))), the degree of the identifiability of the knowledge neuron associated with the element in the large language model may be recognized in view of a probability of a layer of the layers that is associated with an element except a last element of the output data, a probability of a layer of the layers that is associated with a last element of the output data, and a maximum probability of a probability of a layer of the layers that is associated with an element of the output data.

According to the disclosure in (((17))), the user may recognize the degree of the possibility that the element in the output data includes an error by the artificial intelligence.

## Claims

1. An information processing system comprising:
a processor configured to:
acquire input data;
acquire output data generated by artificial intelligence in response to the input data; and
output the output data and error possibility information indicating a degree of possibility that an element of a plurality of elements in the output data includes an error by the artificial intelligence.

2. The information processing system according to claim 1,
wherein the processor is configured to output the output data and the error possibility information that is attached to the element.

3. The information processing system according to claim 2,
wherein the output data is text data, and
wherein the processor is configured to attach the error possibility information to the element in the text data by setting an attribute of a character corresponding to the element as an attribute based on the error possibility information.

4. The information processing system according to any one of claims 1 to 3,
wherein the plurality of elements are all of elements in the output data.

5. The information processing system according to any one of claims 1 to 3,
wherein the element is a predetermined type of element of a plurality of elements in the output data.

6. The information processing system according to claim 5,
wherein the output data is text data, and
wherein the predetermined type of element is at least one of an element serving as a predetermined part of speech or an element composed of a numeral.

7. The information processing system according to any one of claims 1 to 3,
wherein the element is an element other than a predetermined type of element of a plurality of elements in the output data.

8. The information processing system according to claim 7,
wherein the output data is text data, and
wherein the predetermined type of element is an element serving as a predetermined part of speech.

9. The information processing system according to claim 7,
wherein the output data is text data, and
wherein the predetermined type of element is at least one of an element serving as an antonym or a translation element.

10. The information processing system according to any one of claims 1 to 9,
wherein the processor is configured to:
acquire, as the output data, data generated by the artificial intelligence on a basis of a large language model; and
output, as the error possibility information, information generated on a basis of identifiability information indicating a degree of identifiability of a knowledge neuron in the large language model, the knowledge neuron being associated with the element.

11. The information processing system according to claim 10,
wherein the processor is configured to: in response to the identifiability information indicating that the identifiability of the knowledge neuron associated with the element in the large language model is low, generate error possibility information indicating that the possibility that the element includes an error by the artificial intelligence is high.

12. The information processing system according to claim 10,
wherein the processor is configured to acquire the identifiability information on a basis of association information in which a contribution probability is associated with each element of a plurality of elements in the output data, the contribution probability being that one of neurons in a plurality of layers for the element contributes to decision of a subsequent element that is subsequent to the plurality of elements.

13. The information processing system according to claim 12,
wherein the processor is configured to acquire, as the identifiability information, information based on a probability of a layer of the layers that is associated with an element except a last element of the plurality of elements in the association information.

14. The information processing system according to claim 12,
wherein the processor is configured to acquire, as the identifiability information, information based on a probability of a layer of the layers that is associated with a last element of the plurality of elements in the association information.

15. A program causing a computer to execute a process comprising:
acquiring input data;
acquiring output data generated by artificial intelligence in response to the input data; and
outputting the output data and error possibility information indicating a degree of possibility that an element in the output data includes an error by the artificial intelligence.
